(19) Europäisches Patentamt
European Patent Office
Office européen des brevets

(11) **EP 2 054 698 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(21) Anmeldenummer: **07786511.1**

(22) Anmeldetag: **02.08.2007**

(51) Int Cl.:
***G01C 21/34*** *(2006.01)* ***G01C 21/36*** *(2006.01)*

(86) Internationale Anmeldenummer:
**PCT/EP2007/006835**

(87) Internationale Veröffentlichungsnummer:
**WO 2008/022695 (28.02.2008 Gazette 2008/09)**

(54) **NAVIGATIONSSYSTEM**

NAVIGATION SYSTEM

SYSTEME DE NAVIGATION

(84) Benannte Vertragsstaaten:
**DE FR GB**

(30) Priorität: **24.08.2006 DE 102006039634**

(43) Veröffentlichungstag der Anmeldung:
**06.05.2009 Patentblatt 2009/19**

(73) Patentinhaber: **Bayerische Motoren Werke Aktiengesellschaft**
**80809 München (DE)**

(72) Erfinder:
• **TAVA, Marcello**
**80469 München (DE)**
• **KOCH, Uwe**
**85591 Vaterstetten (DE)**
• **BIECHELE, Bernd**
**81375 München (DE)**
• **STEINS, Wilfried**
**85737 Ismaning (DE)**

(56) Entgegenhaltungen:
EP-A- 1 085 299 EP-A- 1 241 445
EP-A1- 0 406 946 EP-A1- 0 767 448
DE-A1- 10 009 850 DE-A1- 19 531 822
DE-A1-102004 004 485 US-A1- 2001 027 377
US-A1- 2005 149 262

EP 2 054 698 B1

**Beschreibung**

Die Erfindung betrifft ein Navigationssystem mit einer Anzeigeeinrichtung zur Anzeige einer Maximalzahl von Fahrspuren.

In den letzten Jahren etablierten sich Fahrzeugnavigationssysteme, mit denen ein Fahrer satellitengestützt auf einer durch das Navigationssystem ermittelten Route von einem Startort zu einem Zielort geführt wird. Die Routenführung basiert dabei auf der Anzeige von Straßen und Richtungspfeilen. Bei zukünftigen Navigationssystemen soll die Routenführung sogar auf der Basis einzelner Fahrspuren einer Straße erfolgen. Problematisch dabei wird es sein, die dadurch vergrößerte Informationsmenge, insbesondere auf Straßen mit vielen Fahrspuren, auf den relativ kleinen Anzeigeeinrichtungen der Fahrzeugnavigationssysteme, deren Anzeigekapazität physikalisch oder programmtechnisch beschränkt ist, so anzuzeigen, dass sie für einen Fahrer schnell und intuitiv erfasst werden kann.

US2001/027377 offenbart ein Navigationssystem, in dem eine empfohlene Fahrspur als ein schraffiertes Viereck angezeigt wird. Die Istzahl der Fahrspuren wird auch bestimmt. Andere nicht empfohlene Fahrspuren werden als nicht schraffierte Vierecke neben den schraffierten Vierecken angezeigt.

DE10009850 offenbart ein Navigationssystem, in dem eine Maximalanzahl von Fahrspurinformationen angezeigt wird. Die Istzahl der Fahrspuren wird auch bestimmt.

Der Erfindung liegt daher die Aufgabe zugrunde, ein fahrspurbasiertes Navigationssystem anzugeben, das auch mit einer Anzeigeeinrichtung vorgegebener Größe auf Straßen mit vielen Fahrspuren einsetzbar ist.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auch auf dem Gedanken, auf einer Anzeigeeinrichtung eines Navigationssystems, die nur für eine Darstellung einer vorgegebenen Maximalzahl von Fahrspur-Grafikobjekten ausgelegt ist, dann nur diese Maximalzahl an Fahrspur-Grafikobjekten darzustellen, wenn die tatsächliche Anzahl (Istzahl) von Fahrspuren der momentan befahrenen Straße größer ist als die Maximalzahl darstellbarer Fahrspur-Grafikobjekte. Ein Fahrspur-Grafikobjekt umfasst dabei beispielsweise eine stilisiere Fahrspurdarstellung.

Dazu weist ein Navigationssystem vorzugsweise eine Anzeigeeinrichtung zur insbesondere stilisierten Darstellung einer vorgegebenen Maximalzahl von Fahrspur-Grafikobjekten und eine Steuereinrichtung auf, die derart eingerichtet ist, dass die Istzahl der Fahrspuren einer Straße ermittelt wird, und dass auf der Anzeigeeinrichtung nur eine Maximalzahl von Fahrspur-Grafikobjekten dargestellt wird, wenn die Maximalzahl kleiner ist als die Istzahl. Die übrigen Fahrspuren werden nicht dargestellt.

Durch die Erfindung wird zunächst erreicht, dass ein wirtschaftlich herstellbares Navigationssystem auch dann fehlerfrei einsetzbar ist, wenn die Anzahl der Fahrspuren einer Straße größer ist als die maximale Anzahl der durch die Anzeigeeinrichtung des Navigationssystems darstellbaren Fahrspuren oder Fahrspur-Grafikobjekte.

Besonders intuitiv zu erfassen ist eine fahrspurbasierte Routenführung für den Fahrer dadurch, dass zumindest ein die nicht angezeigten Fahrspuren repräsentierendes Fahrspurersatz-Grafikobjekt, beispielsweise drei Punkte, dargestellt wird, wenn die Maximalzahl kleiner ist als die Istzahl. Das zumindest eine Fahrspurersatz-Grafikobjekt weist den Fahrer auf eine oder mehrere nicht dargestellte Fahrspuren hin.

Noch intuitiver ist die Darstellung zu erfassen, wenn eine der Darstellung der Maximalzahl von Fahrspur-Grafikobjekten überlagerte Darstellung des zumindest einen Fahrspurersatz-Grafikobjekts derart erfolgt, dass die Lage der Darstellung des Fahrspurersatz-Grafikobjekts der Lage der zumindest einen nicht dargestellten Fahrspur entspricht. Das Fahrspurersatz-Grafikobjekt weist den Fahrer also auch auf die Lage einer oder mehrerer nicht dargestellter Fahrspuren relativ zur Lage der mittels Fahrspur-Grafikobjekten dargestellten Fahrspuren hin.

Vorzugsweise wird das Fahrspurersatz-Grafikobjekt, das eine weitere Ausdehnung der Straße in seitlicher Richtung symbolisiert, auf der Hälfte oder dem Viertel der Anzeigeeinrichtung dargestellt, auf welchen der unvollständige Anteil der Straße dargestellt ist.

Besonders bevorzugt ist das Fahrspurersatz-Grafikobjekt dem Fahrspur-Grafikobjekt oder den Fahrspur-Grafikobjekten überlagert dargestellt, die zwar nicht eine äußerste Fahrspur der Straße repräsentieren aber aufgrund der begrenzten Größe der Anzeigeeinrichtung außen auf der Anzeigeeinrichtung dargestellt sind.

Vorzugsweise erfolgt die Darstellung des Fahrspurersatz-Grafikobjekts neben der Darstellung der Maximalzahl von Fahrspur-Grafikobjekten, wobei die Lage der Darstellung des Fahrspurersatz-Grafikobjekts, insbesondere wie eben beschrieben, der Lage der nicht dargestellten Fahrspuren entspricht.

Vorzugsweise erfolgt die Darstellung des Fahrspurersatz-Grafikobjekts anstatt der Darstellung eines oder der ganz außen liegenden Fahrspurersatz-Grafikobjekte, wobei die Lage der Darstellung des Fahrspurersatz-Grafikobjekts, insbesondere wie eben beschrieben, der Lage der nicht dargestellten Fahrspuren entspricht. In diesem Fall wird also dann, wenn die Istzahl größer ist als die Maximalzahl nur eine um eins bzw. zwei reduzierte Maximalzahl von Fahrspur-Grafikobjekten dargestellt, und zudem ein bzw. zwei Fahrspurersatz-Grafikobjekte dargestellt.

Erfindungsgemäß wird die intuitive, sichere und schnelle Erfassbarkeit der dargestellten fahrspurbasierten Routenführung dadurch erhöht, dass auf der Anzeigeeinrichtung zwei Straßenbegrenzungs-Grafikobjekte dargestellt werden, wenn die Maximalzahl mindestens so groß ist wie die Istzahl, dass nur ein oder kein Straßenbegrenzungs-Grafikobjekt dargestellt wird, wenn die Maximalzahl kleiner ist als die Istzahl, und dass die Darstellung eines Straßenbegrenzungs-Grafikobjekts, insbesondere gegenüber der Darstellung des Fahrspurersatz-Grafikobjekts, entlang der Darstellung eines Fahrspur-Grafikobjekts erfolgt, das die äußerste Fahrbahn der Straße repräsentiert.

Vorzugsweise werden (bevorzugt) die Fahrspuren mittels Fahrspur-Grafikobjekten dargestellt, die zur Verfolgung der durch das Navigationssysterm ermittelten Route (besonders) geeignet, bestimmt oder vorgesehen sind, wenn die Maximalzahl kleiner ist als die Istzahl. Es werden also dann, wenn die Anzahl der tatsächlichen Fahrspuren die Anzahl der maximal auf der Anzeigeeinrichtung mittels Fahrspur-Grafikobjekten darstellbaren Fahrspuren überschreitet, die Fahrspuren zur Darstellung durch Fahrspur-Grafikobjekte ausgewählt, die zur Verfolgung der durch das Navigationssystem ermittelten Route (besonders) geeignet sind. Hat beispielsweise eine Straße sechs Fahrspuren, können aber nur vier davon durch Fahrspur-Grafikobjekte auf der Anzeigeeinrichtung dargestellt werden, so wird zumindest die Fahrspur oder werden zumindest die zwei, drei oder vier Fahrspuren durch Fahrspur-Grafikobjekte dargestellt, die zur Verfolgung der durch das Navigationssystem ermittelten Route besonders geeignet sind. Die Fahrspuren, die zur Verfolgung der durch das Navigationssystem ermittelten Route nicht geeignet sind, werden nicht oder bevorzugt nicht dargestellt. Die Menge der dargestellten Informationen wird dadurch, insbesondere auf wesentliche Informationen, reduziert, so dass ein Fahrer auch in komplexen Verkehrs- und Straßensituationen den Überblick behalten kann.

Besonders bevorzugt ist vorgesehen, dass die Fahrspuren (bevorzugt) durch Fahrspur-Grafikobjekte dargestellt werden, die an der nächsten Abbiegesituation (Kreuzung, Straßeneinfahrt, Autobahnauffahrt, Autobahnabfahrt, Straßenüberquerung, etc.) zur Verfolgung der durch das Navigationssystem ermittelten Route (besonders) geeignet sind. Es werden insbesondere die Fahrspuren (bevorzugt) durch Fahrspur-Grafikobjekte dargestellt, die an der nächsten Abbiegesituation beibehalten werden können, um das Ziel zu erreichen. Dadurch wird ein Fahrer auf einfache und schnell erfassbare Art und Weise frühzeitig auf die richtige Fahrspur geleitet.

Ergänzend dazu ist vorzugsweise vorgesehen, die Fahrspuren (bevorzugt) durch Fahrspur-Grafikobjekte darzustellen, die an der übernächsten Abbiegesituation zur Verfolgung der durch das Navigationssystem ermittelten Route (besonders) geeignet sind. Es werden insbesondere die Fahrspuren (bevorzugt) durch Fahrspur-Grafikobjekte dargestellt, die an der übernächsten Abbiegesituation beibehalten werden können, um das Ziel zu erreichen. Dadurch wird ein Fahrer noch früher auf die richtige Fahrspur geleitet.

Eine besonders bevorzugte Weiterbildung der Erfindung sieht vor, dass der Darstellung von Fahrspuren, die insbesondere zur Verfolgung der durch das Navigationssystem ermittelten Route (besonders) geeignet sind, überlagert jeweils ein Fahrtrichtungs-Grafikobjekt, wie beispielsweise ein Richtungspfeil oder ein Abbiegepfeil, dargestellt ist, welches die durch das Navigationssystem ermittelte Route, insbesondere an der nächsten Abbiegesituation, beschreibt. Insbesondere werden den Fahrspur-Grafikobjekten, die an der nächsten und/oder übernächsten Abbiegesituation beibehalten werden können, um das Ziel zu erreichen, überlagert jeweils ein Fahrtrichtungs-Grafikobjekt dargestellt.

Die Erfindung umfasst selbstverständlich auch Navigationssysteme, bei denen die Erfindung oder ihre Weiterbildungen nicht in jeder Fahrsituation ausgeführt werden, insbesondere die erfindungsgemäßen Darstellungen nur in bestimmten Fahrsituationen oder Straßensituationen erscheinen.

Im Folgenden wird die Erfindung anhand von Beispielen unter Bezugnahme auf die folgenden Figuren näher erläutert:

Figur 1          zeigt eine Prinzip-Darstellung eines Navigationssystems;

Figuren 2 bis 4     zeigen eine Straßenmarkierung und zugehörige Darstellungen von Fahrspuren.

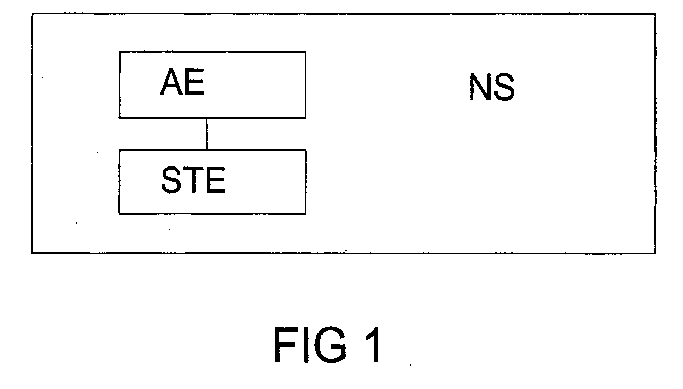

Figur 1 zeigt ein in einem Fahrzeug installiertes Navigationssystem NS mit einer Anzeigeeinrichtung AE, wie einem Grafikdisplay, und einer Steuereinrichtung STE, die das Navigationssystem NS und die Anzeigeeinrichtung AE steuert.

Die Steuereinrichtung STE kann als programmgesteuerte Prozessoreinrichtung oder als anwendungsspezifische integrierte Schaltung ausgeführt sein, und ist zur Ausführung der unten genannten Anzeigevarianten eingerichtet.

Ferner weist das Navigationssystem NS die üblichen Komponenten von Navigationssystemen auf, wie beispielsweise eine Speichereinrichtung, die der Speicherung einer elektronischen Straßenkarte dient. Mittels der Speichereinrichtung, einer Ortsermittlungseinrichtung und/oder einer Sensoreinrichtung, wie beispielsweise einer Kamera, werden die aktuelle Position des Fahrzeuges innerhalb des Straßennetzes, die momentan durch das Fahrzeug befahrene Fahrspur, die Anzahl der Fahrspuren der momentan befahrenen Straße und/oder die virtuelle oder tatsächliche Straßenmarkierung der Straße ermittelt.

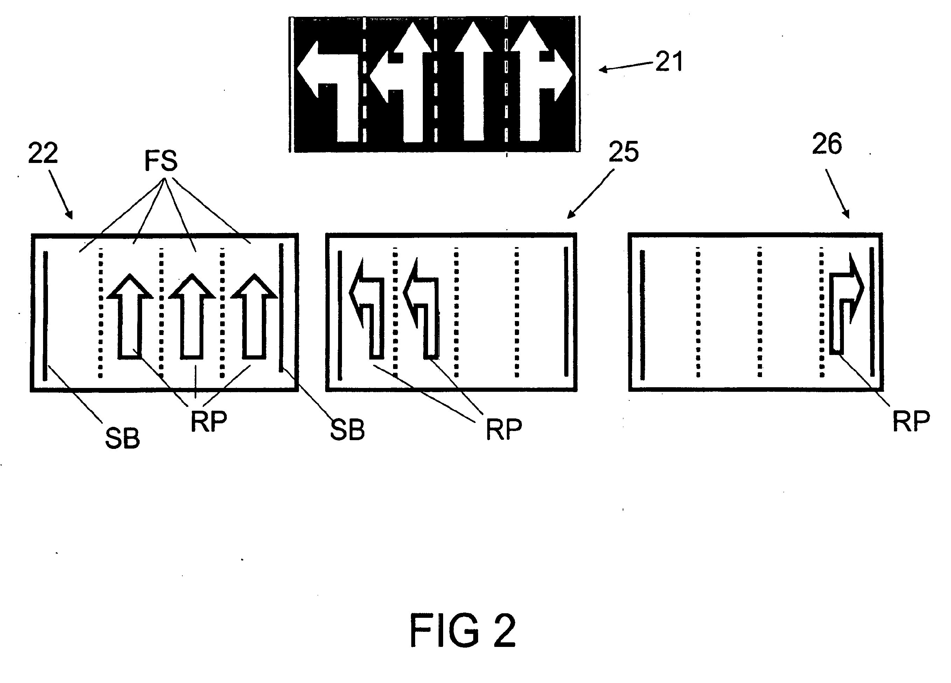

Figur 2 zeigt eine schematische Darstellung einer beispielhaften Straßenmarkierung 21 einer Straße mit vier Fahrspuren mit entsprechenden Abbiegepfeilen oder Fahrtrichtungspfeilen in an sich bekannter Weise. Die Istzahl der Fahrspuren der Straße ist dabei, wie ersichtlich, vier. Diese Straße sei die momentan oder demnächst mit einem Fahrzeug samt Navigationssystem befahrene Straße. Die Erfindung ist dabei unabhängig davon einsetzbar, ob die aktuell befahrene Straße tatsächlich mit Abbiegepfeilen oder Fahrtrichtungspfeilen versehen ist, oder ob die entsprechenden Abbiegepfeile oder Fahrtrichtungspfeile den verschiedenen Fahrspuren auf andere Weise (virtuell markiert) zugeordnet sind. Diese Zuordnung wird entweder aus einer Speichereinrichtung des Navigationssystems gelesen oder mittels geeigneter Sensoren erfasst.

Die Anzeigeeinrichtung ist in diesem Beispiel dazu eingerichtet, maximal vier (Maximalzahl) Fahrspuren jeweils durch ein Fahrspur-Grafikobjekt FS darzustellen. Straßenbegrenzungs-Grafikobjekte SB sind jeweils als eine durchgezogene Linie entlang der Darstellung der beiden äußeren Fahrspur-Grafikobjekte FS dargestellt. Die Darstellung der Fahrspur-Grafikobjekte FS kann ein Straßenbegrenzungs-Grafikobjekt SB und/oder die punktierten Trennlinien umfassen, kann aber auch lediglich die Darstellung von entsprechenden Flächen dazwischen umfassen.

Der Fahrer soll nun je nach eingestellter Route oder Routenführung, insbesondere je nach aktueller Fahrzeugposition und Zielort, durch eine entsprechende Darstellung auf der Anzeigeeinrichtung eines Navigationssystems basierend auf der tatsächlichen oder virtuellen Straßenmarkierung zu seinem Ziel geführt werden. Dazu wird er auf - für die Verfolgung der gewählten Route - geeignete Fahrspuren aufmerksam gemacht oder geführt. Dies erfolgt durch die Anzeige entsprechender Fahrtrichtungs-Grafikobjekte RP, die den entsprechenden Darstellungen der geeigneten Fahrspuren durch Fahrspur-Grafikobjekte FS überlagert dargestellt werden.

Es sind drei verschiedene Darstellungen 22,25,26 auf der Anzeigeeinrichtung gezeigt, die sich je nach eingestellter Routenführung, insbesondere an der nächsten Abbiegesituation, voneinander unterscheiden.

Bei der ersten Darstellung 22 wird davon ausgegangen, dass das Fahrzeug gemäß Routenführung an der nächsten Abbiegesituation geradeaus fahren soll. Wie der Darstellung der Straßenmarkierung 21 zu entnehmen ist, sind hierfür nur die drei rechten Fahrspuren geeignet, deren entsprechende Fahrspur-Grafikobjekte FS daher in der Darstellung mit einem der Route entsprechenden "Gerade-Aus-Pfeil" RP markiert oder überlagert werden.

Bei der zweiten Darstellung 25 wird davon ausgegangen, dass das Fahrzeug gemäß Routenführung an der nächsten Abbiegesituation links abbiegen soll. Wie der Darstellung der Straßenmarkierung 21 zu entnehmen ist, sind hierfür nur die beiden linken Fahrspuren geeignet, deren entsprechende Fahrspur-Grafikobjekte FS daher jeweils in der Darstellung mit einem der Route entsprechenden "Links-Abbiege-Pfeil" RP markiert werden.

Bei der dritten Darstellung 26 wird davon ausgegangen, dass das Fahrzeug gemäß Routenführung an der nächsten Abbiegesituation rechts abbiegen soll. Wie der Darstellung der Straßenmarkierung 21 zu entnehmen ist, ist hierfür nur die rechte Fahrspur geeignet, die daher in der Darstellung mit einem der Route entsprechenden "Rechts-Abbiege-Pfeil" RP markiert wird.

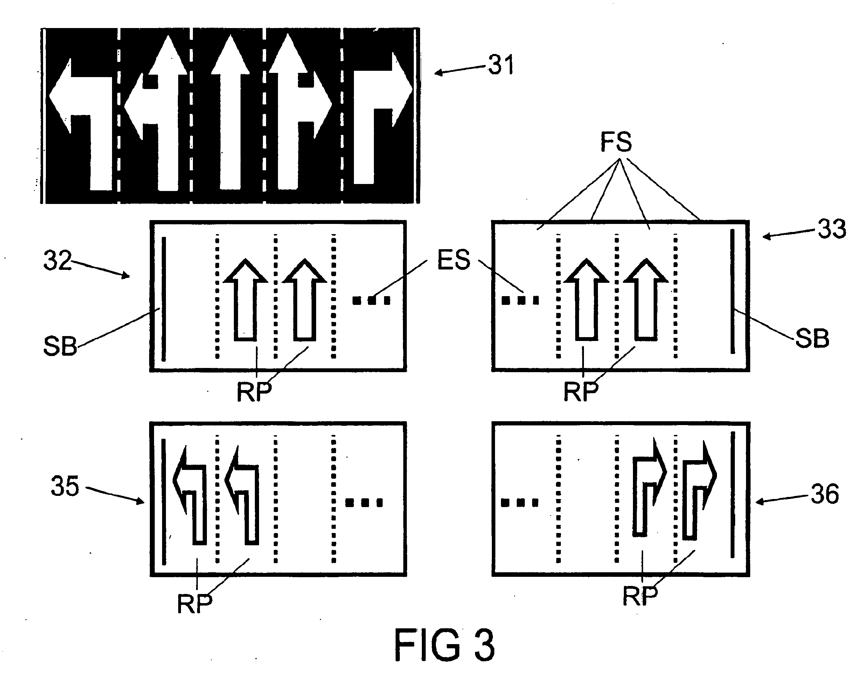

Figur 3 zeigt eine schematische Darstellung einer beispielhaften Straßenmarkierung 31 einer Straße mit fünf Fahrspuren mit entsprechenden Abbiegepfeilen in an sich bekannter Weise. Die Istzahl der Fahrspuren ist also fünf. Die Anzeigeeinrichtung ist aber wieder nur dazu eingerichtet, maximal vier (Maximalzahl) Fahrspur-Grafikobjekte FS darzustellen. Die Istzahl ist also größer als die Maximalzahl, weshalb nicht mehr alle Fahrspuren in gleicher Weise dargestellt werden können.

Der Fahrer soll nun wieder je nach Route oder Routenführung durch eine entsprechende Darstellung auf der Anzeigeeinrichtung basierend auf der tatsächlichen oder virtuellen Straßenmarkierung zu seinem Ziel geführt werden. Dazu wird er wieder durch die Anzeige entsprechender Fahrtrichtungs-Grafikobjekte RP auf - für die Verfolgung der gewählten Route - geeignete Fahrspuren aufmerksam gemacht oder geführt.

Es sind nun vier verschiedene Darstellungen 32,33,35,36 gezeigt, die sich je nach zu Grunde liegender Routenführung, insbesondere an der nächsten und/oder übernächsten Abbiegesituation, voneinander unterscheiden.

Bei den ersten beiden Darstellungen 32 und 33 wird davon ausgegangen, dass das Fahrzeug gemäß Routenführung an der nächsten Abbiegesituation geradeaus fahren soll.

Wie der Darstellung der Straßenmarkierung 31 zu entnehmen ist, sind hierfür nur die drei mittleren Fahrspuren geeignet, von denen daher in der Darstellung zwei mit einem der Route entsprechenden "Gerade-Aus-Pfeil" RP markiert werden. Zudem ist auf dem bzw. anstelle des Fahrspur-Grafikobjektes, das zwar ganz außen auf der Anzeigeeinrichtung dargestellt wird bzw. darzustellen wäre, das aber nicht die äußere Fahrbahn der Straße repräsentiert, ein Fahrspurersatz-Grafikobjekt ES dargestellt, das auf die nicht dargestellte ganz rechte (Darstellung 32) bzw. ganz linke (Darstellung 33) Fahrspur der Straße hinweist. Außerdem ist entlang des außen dargestellten Fahrspur-Grafikobjektes, das zudem die äußere Fahrspur der Straße repräsentiert, ein Straßenbegrenzungs-Grafikobjekt SB dargestellt.

Es liegt alternativ dazu,

- das Straßenbegrenzungs-Grafikobjekt SB nicht darzustellen, und/oder
- das Fahrspurersatz-Grafikobjekt ES nicht darzustellen, und/oder
- der Fahrspurdarstellung, der das Fahrspurersatz-Grafikobjekt ES überlagert ist, auch die Darstellung eines Richtungspfeils, hier eines "Gerade-Aus-Pfeils", zu überlagern, da ja entsprechend der Straßenmarkierung auch diese Fahrspur zur Verfolgung der Route geeignet ist.

Besonders bevorzugt ist vorgesehen, aus den beiden möglichen Darstellungen 32 und 33 unter Berücksichtigung der übernächsten Abbiegesituation die geeignetere auszuwählen und anzuzeigen.

Ist an der übernächsten Abbiegesituation ein Abbiegen nach links erforderlich, so wird die Darstellung 32 ausgewählt, ist an der übernächsten Abbiegesituation dagegen ein Abbiegen nach rechts erforderlich, so wird die Darstellung 33 ausgewählt. Denn die derart ausgewählte Darstellung zeigt die Fahrspuren an, die für die nächste Abbiegesituation geeignet sind und für die übernächste Abbiegesituation geeigneter sind als andere an der nächsten Abbiegesituation geeignete.

Bei der dritten Darstellung 35 wird davon ausgegangen, dass das Fahrzeug gemäß Routenführung an der nächsten Abbiegesituation links abbiegen soll. Wie der Darstellung der Straßenmarkierung zu entnehmen ist, sind hierfür nur die beiden linken Fahrspuren geeignet, die daher jeweils in der Darstellung mit einem der Route entsprechenden "Links-Abbiege-Pfeil" RP markiert werden.

Bei der vierten Darstellung 36 wird davon ausgegangen, dass das Fahrzeug gemäß Routenführung an der nächsten Abbiegesituation rechts abbiegen soll. Wie der Darstellung der Straßenmarkierung zu entnehmen ist, sind hierfür nur die beiden rechten Fahrspuren geeignet, die daher in der Darstellung mit einem der Route entsprechenden "Rechts-Abbiege-Pfeil" RP markiert werden.

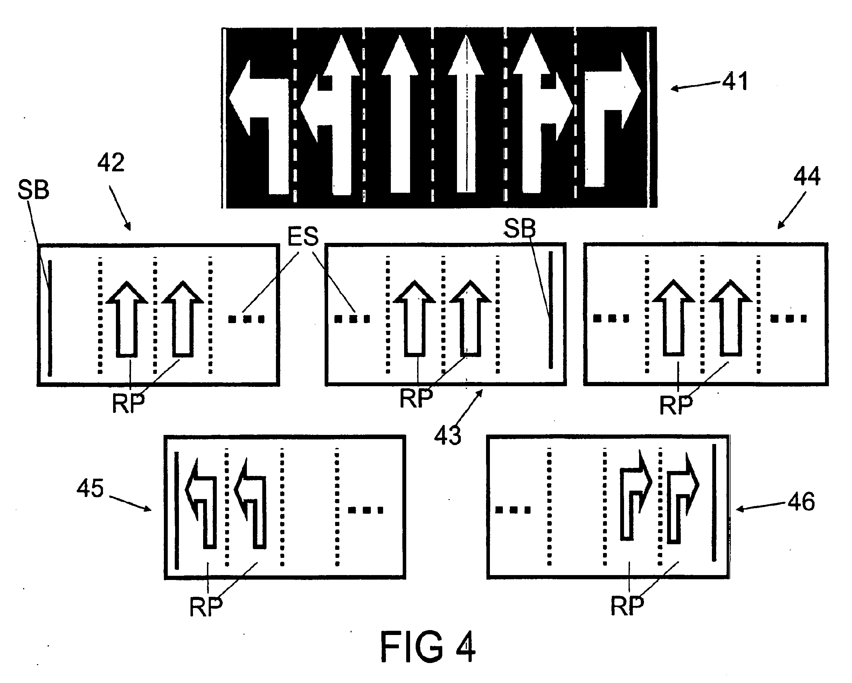

Figur 4 zeigt eine schematische Darstellung einer beispielhaften Straßenmarkierung 41 einer Straße mit sechs Fahrspuren mit entsprechenden Abbiegepfeilen in an sich bekannter Weise. Die Istzahl der Fahrspuren ist also sechs. Die Anzeigeeinrichtung ist aber wieder nur dazu eingerichtet, maximal vier (Maximalzahl) Fahrspur-Grafikobjekte FS darzustellen. Es können wieder nicht alle Fahrspuren in gleicher Weise dargestellt werden.

Der Fahrer soll nun wieder je nach Route oder Routenführung durch eine entsprechende Darstellung auf der Anzeigeeinrichtung basierend auf der tatsächlichen oder virtuellen Straßenmarkierung zu seinem Ziel geführt werden.

Es sind nun fünf verschiedene Darstellungen 42,43,44,45,46 gezeigt, die sich je nach zu Grunde liegender Routenführung, insbesondere an der nächsten und/oder übernächsten Abbiegesituation, voneinander unterscheiden.

Bei den ersten drei Darstellungen 42,43 und 44 wird davon ausgegangen, dass das Fahrzeug gemäß Routenführung an der nächsten Abbiegesituation geradeaus fahren soll.

Wie der Darstellung der Straßenmarkierung 41 zu entnehmen ist, sind hierfür nur die vier mittleren Fahrspuren geeignet, von denen daher in der Darstellung zwei mit einem der Route entsprechenden "Gerade-Aus-Pfeil" RP markiert werden. Zudem sind auf den Fahrspuren, die zwar ganz außen auf der Anzeigeeinrichtung durch Fahrspur-Grafikobjekte dargestellt werden, die aber nicht die äußere Fahrspur der Straße bilden, jeweils ein Fahrspurersatz-Grafikobjekt ES dargestellt, das auf die nicht dargestellten rechten (Darstellung 42) bzw. linken (Darstellung 44) bzw. äußeren (Darstellung 43) Fahrspuren der Straße hinweisen. Außerdem ist entlang der außen dargestellten Fahrspur (Fahrspur-Grafikobjekt), die zudem die äußere Fahrspur der Straße bildet, ein Straßenbegrenzungs-Grafikobjekt SB dargestellt.

Es liegt alternativ dazu,

- das Straßenbegrenzungs-Grafikobjekt SB nicht darzustellen, und/oder
- das Fahrspurersatz-Grafikobjekt ES nicht darzustellen, und/oder
- der Fahrspurdarstellung, der das Fahrspurersatz-Grafikobjekt ES überlagert ist, auch die Darstellung eines Richtungspfeils, hier eines "Gerade-Aus-Pfeils", zu überlagern, da ja entsprechend der Straßenmarkierung auch diese Fahrspur zur Verfolgung der Route geeignet ist.

Besonders bevorzugt ist vorgesehen, aus den drei möglichen Darstellungen 42,43 und 45 unter Berücksichtigung der übernächsten Abbiegesituation die geeignetere auszuwählen anzuzeigen.

Ist an der übernächsten Abbiegesituation ein Abbiegen nach links erforderlich, so wird die Darstellung 42 ausgewählt, ist an der übernächsten Abbiegesituation dagegen ein Abbiegen nach rechts erforderlich, so wird die Darstellung 43 ausgewählt. Ist an der übernächsten Abbiegesituation dagegen ein Geradeausfahren erforderlich, so wird die Darstellung 44 ausgewählt. Denn die derart ausgewählte Darstellung zeigt die Fahrspuren an, die für die nächste Abbiegesituation geeignet sind und für die übernächste Abbiegesituation geeigneter sind als andere.

Bei der vierten Darstellung 45 wird davon ausgegangen, dass das Fahrzeug gemäß Routenführung an der nächsten Abbiegesituation links abbiegen soll. Wie der Darstellung der Straßenmarkierung zu entnehmen ist, sind hierfür nur die beiden linken Fahrspuren geeignet, die daher jeweils in der Darstellung mit einem der Route entsprechenden "Links-Abbiege-Pfeil" RP markiert werden.

Bei der fünften Darstellung 46 wird davon ausgegangen, dass das Fahrzeug gemäß Routenführung an der nächsten Abbiegesituation rechts abbiegen soll. Wie der Darstellung der Straßenmarkierung zu entnehmen ist, sind hierfür nur die beiden rechten Fahrspuren geeignet, die daher in der Darstellung mit einem der Route entsprechenden "Rechts-Abbiege-Pfeil" RP markiert werden.

Im Folgenden wird eine Ausführungsvariante der Erfindung formal beschrieben. Es wird dabei angenommen, dass das Fahrspurersatz-Grafikobjekt ES nicht einem dargestellten Fahrspur-Grafikobjekt überlagert dargestellt wird, sondern anstelle eines Fahrspur-Grafikobjekts dargestellt wird. Die Maximalzahl darstellbarer Fahrspur-Grafikobjekte und/oder Fahrspurersatz-Grafikobjekte n ist daher in diesem Beispiel 4. Die Istzahl N von Fahrspuren ist 6. Wenn, wie in diesem Beispiel, die Istzahl größer als die Maximalzahl ist, dann sind nur n-1=3 Fahrspur-Grafkobjekte und ein Fahrspurersatz-Grafikobjekt darstellbar bzw. n-2=2 Fahrspur-Grafikobjekte und zwei Fahrspurersatz-Grafikobjekt darstellbar.

Es werden die folgenden grafischen Elemente zur Darstellung verwendet:

- Straßenbegrenzungs-Grafikobjekt: beispielsweise eine durchgehende Linie zeigt entweder den physikalischen Straßenrand an oder eine Straßenlinie an, welche die momentane Straße von einer benachbarten Straße trennt, die in eine entgegen gesetzte Richtung befahrbar ist, oder auf die aus anderen Gründen nicht gewechselt werden kann.

- Fahrspurbegrenzungs-Grafikobjekt: beispielsweise eine gepunktete oder gestrichelte Linie trennt die Straße in Fahrspuren auf, für welche unterschiedliche Verkehrsregeln gelten können.

- Fahrspurhinweis-Grafikobjekte (Fahrtrichtungs-Grafikobjekte): beispielsweise Richtungspfeile zwischen zwei Fahrspurbegrenzungs-Grafikobjekten oder zwischen einem Fahrspurbegrenzungs-Grafikobjekt und einem Straßenbegrenzungs-Grafikobjekt weisen auf empfohlene oder geeignete Fahrspuren hin, von denen aus das nächste Manöver oder Abbiegen durchgeführt werden kann

- Fahrspurersatz-Grafikobjekt: beispielsweise drei Punkte weisen darauf hin, dass eine oder mehrere Fahrspuren nicht dargestellt werden. Das Fahrspurersatz-Grafikobjekt kann auch durch eine Zahl ergänzt oder ersetzt werden, die die Anzahl der nicht dargestellten Fahrspuren angibt.

Die Fahrspuren seien nun durch eine laufende ganze Zahl i repräsentiert, so dass i von1 bis N ansteigt, und dabei die Fahrspuren von links nach rechts repräsentiert. Beispielsweise ist die dritte Fahrspur von links i=3.

Der Satz aller Fahrspuren sei bezeichnet mit $L_i$ = {1,..N}, wobei der Index $i$ angibt, dass die Identifikation der Elemente von $L_i$ auf der $i$-Numerationsregel basiert.

Der Satz der empfohlenen oder geeigneten Fahrspuren sei bezeichnet mit $R_i \subseteq L_i$.

Die Weite $w_R$ der wesentlichen Fahrspurinformation sei definiert als

$$w_R = \max(R_i) - \min(R_i) + 1 + \min[\min(R_i) - 1, N - \max(R_i)].$$

Der Satz der zentralen Fahrspuren $C_i \subseteq R_i$ sei definiert als der Satz von Fahrspuren aus $R_i$, der folgende Bedingung erfüllt:

$$\left| \frac{N+1}{2} - i \right| = \max_{i \in R_i} \left( \left| \frac{N+1}{2} - i \right| \right).$$

Der Satz von äußeren Fahrspuren $S_i \subseteq R_i$ sei definiert als der Satz von Fahrspuren aus $R_i$, der folgende Bedingung erfüllt:

$$\min(i, N - i + 1) < n.$$

Es gelten folgende Regeln:

- Fall 1: $n > w_R$.

  o Es sei $i_c = \max(C_i)$. Wenn $i_c < (N + 1)/2$, stelle die Fahrspuren $i$ = 1,.. $n-1$ dar, und stelle ein Fahrspurersatz-Grafikobjekt ES rechts dar. Wenn $i_c \geq (N + 1)/2$, stelle die Fahrspuren $i$ = N-n+2, ..$N$ dar, und stelle ein Fahrspurersatz-Grafikobjekt links dar.

- Fall 2: $n \leq w_R$.

  - Fall 2.1: Wenn3 $i \in S_i$ so dass $i<n$ und wenn 3 $i \in S_i$ so *dass N-i+1 <n.* Wenn das übemächste Manöver ein Linksabbiegen ist, stelle die Fahrspuren $i = 1,.. n-1$ dar, und stelle ein Fahrspurersatz-Grafikobjekt rechts dar. Wenn das übernächste Manöver ein Rechtsabbiegen ist, stelle die Fahrspuren $i = N-n+2, ..N$ dar, und stelle ein Fahrspurersatz-Grafikobjekt links dar. Wenn das übernächste Manöver eine Geradeaus-Fahrt ist, dann finde die Werte $i$, welche das $min(i-1,N-i)$ minimieren und setze $i_s$ gleich dem Maximum dieser Werte. Wenn nun $i_s < (N + 1)/2$, dann stelle die Fahrspuren $i = 1,.. n-1$ dar, und stelle ein Fahrspurersatz-Grafikobjekt rechts dar. Wenn $i_s \geq (N + 1)/2$, dann stelle die Fahrspuren $i = N-n+2, ..N$ dar, und stelle ein Fahrspurersatz-Grafikobjekt links dar.

- Fall 2.2: Wenn 3 $i \in S_i$ so dass $i<n$ und wenn $\sim\exists \, i \in S_i$ so *dass N-i+1 <n,* stelle die Fahrspuren $i = 1,.. n-1$ dar, und stelle ein Fahrspurersatz-Grafikobjekt rechts dar. Wenn -3 $i$ e $S_i$ so *dass i<n* und 3 $i \in S_i$ so *dass N-i+1 <n,* stelle die Fahrspuren d $i = N-n+2, ..N$ dar ,und stelle ein Fahrspurersatz-Grafikobjekt links dar.

- Fall 2.3: Wenn $S_i = \varnothing$, wähle $i_c \in C_i$ und stelle die Fahrspuren $i = i_c, i_c+1$ dar, und stelle ein Fahrspurersatz-Grafikobjekt rechts dar und ein Fahrspurersatz-Grafikobjekt links dar.

## Patentansprüche

1. Navigationssystem (NS)
   mit einer Anzeigeeinrichtung (AE), die zur Darstellung einer vorgegebenen Maximalzahl von Fahrspuren durch jeweils ein Fahrspur-Grafikobjekt (FS) ausgelegt ist, und
   mit einer Steuereinrichtung (STE), die derart eingerichtet ist,
   dass die Istzahl der Fahrspuren einer Straße ermittelt wird, und
   dass auf der Anzeigeeinrichtung (AE) nur die Maximalzahl von Fahrspur-Grafikobjekten (FS) dargestellt wird, wenn die Maximalzahl von Fahrspur-Grafikobjekten kleiner ist als die Istzahl, **dadurch gekennzeichnet, dass** das Navigationssystem (NS) derart eingerichtet ist,
   dass auf der Anzeigeeinrichtung (AE) zwei Straßenbegrenzungs-Grafikobjekte (SB) dargestellt werden, wenn die Maximalzahl mindestens so groß ist wie die Istzahl, dass nur ein oder kein Straßenbegrenzungs-Grafikobjekt (SB) dargestellt wird, wenn die Maximalzahl kleiner ist als die Istzahl, und
   dass die Darstellung eines Straßenbegrenzungs-Grafikobjekts (SB) entlang der Darstellung des Fahrspur-Grafikobjekts (FS) erfolgt, das eine äußerste Fahrspur der Straße repräsentiert.

2. Navigationssystem (NS) nach Anspruch 1, das derart eingerichtet ist, dass
   bei dem auf der Anzeigeeinrichtung (AE) ein Fahrspurersatz-Grafikobjekt (ES) dargestellt wird, wenn die Maximalzahl kleiner ist als die Istzahl.

3. Navigationssystem (NS) nach Anspruch 2, das derart eingerichtet ist, dass
   bei dem die Darstellung des Fahrspurersatz-Grafikobjekts (ES) auf der Anzeigeeinrichtung (AE) der Darstellung der dargestellten Maximalzahl von FahrspurGrafikobjekten (FS) auf der Anzeigeeinrichtung (AE) überlagert ist, und
   bei dem die Lage der Darstellung des Fahrspurersatz-Grafikobjekts (ES) der Lage der nicht dargestellten Fahrspur der Straße entspricht.

4. Navigationssystem (NS) nach Anspruch 2,
   das derart eingerichtet ist, dass die Darstellung des Fahrspurersatz-Grafikobjekts (ES) auf der Anzeigeeinrichtung (AE) neben der Darstellung der Maximalzahl von Fahrspur-Grafikobjekten (FS) auf der Anzeigeeinrichtung (AE) erfolgt, und
   bei dem die Lage der Darstellung des Fahrspurersatz-Grafikobjekts (ES) der Lage der nicht dargestellten Fahrspuren der Straße entspricht.

5. Navigationssystem (NS) nach einem der vorhergehenden Ansprüche,
   das derart eingerichtet ist, dass wenn die Maximalzahl kleiner ist als die Istzahl, bevorzugt die Fahrspuren der Straße als Fahrspur-Grafikobjekte (FS) dargestellt werden, die zur Verfolgung
   der durch das Navigationssystem (NS) ermittelten Route besonders geeignet oder bestimmt sind.

6. Navigationssystem (NS) nach Anspruch 5, das derart eingerichtet ist, dass
   bevorzugt die Fahrspuren der Straße als Fahrspur-Grafikobjekte (FS) dargestellt werden, die an der nächsten Abbiegesituation zur Verfolgung der durch das Navigationssystem (NS) ermittelten Route besonders geeignet oder bestimmt sind.

7. Navigationssystem (NS) nach Anspruch 6, das derart eingerichtet ist, dass bevorzugt die Fahrspuren der Straße als Fahrspur-Grafikobjekte (FS) dargestellt werden, die an der übernächsten Abbiegesituation zur Verfolgung der durch das Navigationssystem (NS) ermittelten Route besonders geeignet oder bestimmt sind.

8. Navigationssystem (NS) nach einem der vorhergehenden Ansprüche, das derart eingerichtet ist, dass der Darstellung von Fahrspur-Grafikobjekten (FS), die zur Verfolgung der durch das Navigationssystem (NS) ermittelten Route besonders geeignete oder bestimmte Fahrspuren repräsentieren, überlagert jeweils ein Fahrtrichtungs-Grafikobjekt (RP) dargestellt ist, welches die durch das Navigationssystem (NS) ermittelte Route, insbesondere an der nächsten Abbiegesituation, beschreibt.

**Claims**

1. A navigation system (NS) with a display device (AE), which is designed to display a predetermined maximum number of driving lanes by means of a respective driving lane graphic object (FS) and with a control device (STE), which is set up in such a way that the actual number of driving lanes of a road is determined, and in that only the maximum number of driving lane graphic objects (FS) is displayed on the display device (AE) when the maximum number of driving lane graphic objects is smaller than the actual number, **characterised in that** the navigation system (NS) is set up in such a way that two road limitation graphic objects (SB) are displayed on the display device (AE) when the maximum number is at least as large as the actual number, **in that** only one or no road limitation graphic object (SB) is displayed when the maximum number is smaller than the actual number, and **in that** the display of a road limitation graphic object (SB) takes place along the display of the driving lane graphic object (FS), which represents an outermost driving lane of the road.

2. A navigation system (NS) according to claim 1, which is set up in such a way that a driving lane replacement graphic object (ES) is displayed on the display device (AE) when the maximum number is smaller than the actual number.

3. A navigation system (NS) according to claim 2, which is set up in such a way that the display of the driving lane replacement graphic object (ES) on the display device (AE) is superimposed on the display of the maximum number displayed of driving lane graphic objects (FS) on the display device (AE), and wherein the position of the display of the driving lane replacement graphic object (ES) corresponds to the position of the driving lane, not displayed, of the road.

4. A navigation system (NS) according to claim 2, which is set up in such a way that the display of the driving lane replacement graphic object (ES) on the display device (AE) takes place next to the display of the maximum number of driving lane graphic objects (FS) on the display device (AE), and wherein the position of the display of the driving lane replacement graphic object (ES) corresponds to the position of the driving lanes, not displayed, of the road.

5. A navigation system (NS) according to any one of the preceding claims, which is set up in such a way that when the maximum number is smaller than the actual number, the driving lanes of the road are preferably displayed as driving lane graphic objects (FS), which are particularly suitable or intended to follow the route determined by the navigation system (NS).

6. A navigation system (NS) according to claim 5, which is set up in such a way that the driving lanes of the road are preferably displayed as driving lane graphic objects (FS), which are especially suitable or intended to follow the route determined by the navigation system (NS) at the next turn-off situation.

7. A navigation system (NS) according to claim 6, which is set up in such a way that the driving lanes of the road are preferably displayed as driving lane graphic objects (FS), which are especially suitable or intended to follow the route determined by the navigation system (NS) at the next but one turn-off situation.

8. A navigation system (NS) according to any one of the preceding claims, which is set up in such a way that, in each case, a driving direction graphic object (RP), which describes the route determined by the navigation system (NS), more especially at the next turn-off situation, is displayed in each case, superimposed on the display of driving lane graphic objects (FS), which represent driving lanes that are especially suitable or intended to follow the route determined by the navigation system (NS).

**Revendications**

1. Système de navigation (NS), comportant :

   un dispositif d'affichage (AE) qui est réalisé pour permettre de représenter un nombre maximum prédéfini de voies de circulation par un objet graphique de voie de circulation (FS) respectif, et
   un dispositif de commande (STE) qui est réalisé de façon à détecter le nombre réel de voies de circulation d'une chaussée, et de sorte que, sur le dispositif d'affichage (AE) seul le nombre maximum d'objets graphiques de voie de circulation (FS) soit représenté lorsque ce nombre maximum d'objets graphiques de voie de circulation est inférieur au nombre réel,
   **caractérisé en ce que**
   le système de navigation (NS) est conçu de sorte que deux objets graphiques de limitation de chaussée (SB) soient représentés sur le dispositif d'affichage (AE) lorsque le nombre maximum est au moins égal au nombre réel,
   que
   seul un ou aucun objet graphique de limitation de chaussée (SB) ne soit représenté lorsque le nombre maximum est inférieur au nombre réel, et que la représentation d'un objet graphique de limitation de chaussée (SB) s'effectue le long de la représentation de l'objet graphique de voie de circulation (FS) qui représente la voie de circulation la plus externe de la chaussée.

2. Système de navigation (NS) conforme à la revendication 1, conçu de sorte qu'un objet graphique de remplacement de voie de circulation (ES) soit représenté sur le dispositif d'affichage (AE) lorsque le nombre maximum est inférieur au nombre réel.

3. Système de navigation (NS) conforme à la revendication 2, conçu de sorte que la représentation de l'objet graphique de remplacement de voie de circulation (ES) sur le dispositif d'affichage (AE) soit superposé à la représentation du nombre maximum d'objets graphiques de voie de circulation (FS) représenté sur le dispositif d'affichage (AE), et que la position de la représentation de l'objet graphique de remplacement de voie de circulation (ES) corresponde à la position de la voie de circulation de la chaussée qui n'est pas représentée.

4. Système de navigation (NS) conforme à la revendication 2, conçu de sorte que la représentation de l'objet graphique de remplacement de voie de circulation (ES) sur le dispositif d'affichage (AE) s'effectue à côté de la représentation du nombre maximum d'objets graphiques de voie de circulation (FS) sur le dispositif d'affichage (AE), et que la position de la représentation de l'objet graphique de remplacement de voie de circulation (ES) corresponde à la position des voies de circulation de la chaussée qui ne sont pas représentées.

5. Système de navigation (NS) conforme à l'une des revendications précédentes, conçu de sorte que lorsque le nombre maximum est inférieur au nombre réel, les voies de circulation de la chaussées soient de préférence, représentées sous la forme d'objets graphiques de voie de circulation (FS) qui sont particulièrement adaptés ou déterminés pour suivre l'itinéraire détecté par la système de navigation (NS).

6. Système de navigation (NS) conforme à la revendication 5, conçu de sorte que les voies de circulation de la chaussée soient de préférence, représentées sous la forme d'objets graphiques de voie de circulation (FS) qui sont particulièrement adaptés ou déterminés pour suivre l'itinéraire détecté par la système de navigation (NS) lors de la situation de virage suivante.

7. Système de navigation (NS) conforme à la revendication 6, conçu de sorte que les voies de circulation de la chaussée soient de préférence représentées sous la forme d'objets graphiques de voie de circulation (FS) qui sont particulièrement adaptés ou déterminés pour suivre l'itinéraire détecté par la système de navigation (NS) lors de la seconde situation de virage suivante.

8. Système de navigation (NS) conforme à conforme à l'une des revendications précédentes, conçu de sorte que la représentation d'objets graphiques de voie de circulation (FS) qui sont particulièrement adaptés ou déterminés pour suivre l'itinéraire détecté par le système de navigation (NS) soit représentée en étant respectivement superposée à un objet graphique de sens de circulation (RP) qui décrit l'itinéraire détecté par le système de navigation (NS) en particulier lors de la situation de virage suivante.

| | |
|---|---|
| AE | NS |
| STE | |

**FIG 1**

# FIG 2

EP 2 054 698 B1

FIG 3

EP 2 054 698 B1

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2001027377 A
- DE 10009850